Europäisches Patentamt

(19) European Patent Office

Office européen des brevets

(11) Numéro de publication: **0 345 184**
A1

## (12) DEMANDE DE BREVET EUROPEEN

(21) Numéro de dépôt: 89440036.5

(22) Date de dépôt: 28.04.89

(51) Int. Cl.⁴: **A 01 K 61/00**

(30) Priorité: 18.05.88 FR 8806838

(43) Date de publication de la demande:
06.12.89 Bulletin 89/49

(84) Etats contractants désignés:
BE DE ES GB GR IT NL SE

(71) Demandeur: SOCIETE A.E.E.E.(
ASSAINISSEMENT-ENTRETIEN-ENVIRONNEMENT-
ECOLOGIE) S.A.
64 Avenue de Pessicart
F-06100 Nice (FR)

(72) Inventeur: Gueli, Albert
La Tolède 3 Rue Acchiardi de St Léger
F-06300 Nice (FR)

Moro, Jacques
Villa de Rague 605 Voie Julia
F-06250 Mougins (FR)

Meinesz, Alexandre
Villa Kalliste 9 Avenue Chateaubriand
F-06100 Nice (FR)

Simonian, Michel
Les Hautes Ginestières
F-06270 Villeneuve-Loubet (FR)

(74) Mandataire: Bossard, Jacques-René
Cabinet MEYER & COURTASSOL Bureau EUROPE 20
Place des Halles
F-67000 Strasbourg (FR)

(54) **Recif-abri.**

(57) Récif artificiel marin (1) destiné à servir d'abri à la faune marine, pour en favoriser la reconstitution et l'accroissement, caractérisé en ce qu'il consiste en une structure creuse de forme arrondie, ouvert sur sa face inférieure par laquelle il repose sur le fond (3) et comportant au niveau de sa périphérie inférieure des ouvertures (4) réparties de manière à ne pas se faire face les unes aux autres.

Bundesdruckerei Berlin

EP 0 345 184 A1

**Description**

## RECIF-ABRI.

La présente invention concerne un nouveau type de récif artificiel destiné à favoriser l'accroissement de la faune marine sédentaire des zones côtières où elle a été très réduite par une pêche supérieure aux capacités d'exploitation, par la pollution ou par les constructions sur la mer (décharges, ports, plages artificielles, aéroports, etc...). Contrairement à tous les récifs proposés actuellement, celui-ci permet la poursuite des activités traditionnelles de pêche et est conçu pour favoriser en premier lieu le rôle d'abri et en second lieu le rôle nutritionnel.

De nombreux récifs artificiels ont été réalisés ces vingt dernières années. Les descriptions de ces réalisations sont résumées dans une étude bibliographique portant sur 792 références, (étude éditée en Novembre 1984 par l'IFREMER - Institut Français pour l'Exploitation de la Mer - avec la participation de l'un des inventeurs de la présente demande de brevet). Cette étude décrit de nombreuses tentatives, le plus souvent expérimentales. Quatre rôles essentiels sont attribués aux récifs :

Rôle attractif :

Il est reconnu que les grands récifs (supérieurs à 100 m 3) jouent un rôle attractif, d'une part par les vibrations des structures qui attirent de loin les poissons (surtout les poissons non sédentaires), et d'autre part par la diversification de la nourriture fixée sur le récif, souvent disposé sur un fond uniforme.

Rôle nutritionnel :

Les algues, premier maillon de la chaine alimentaire benthique, et de nombreux groupes d'invertébrés peuvent se fixer sur des substrats solides artificiels. La fixation de ces organismes est d'autant plus utile et recherchée par la faune comestible (poissons, crustacés, céphalopodes) que le substrat sur lequel est disposé le récif est uniforme (fond de sable, de vase ou couvert par la même phanérogame marine).

Rôle d'abri :

Sur les fonds uniformes de sable, de vase ou de phanérogames marines, les abris rocheux sont rares. Ainsi même si la nourriture naturelle est présente et abondante, l'absence d'abri devient le facteur limitant le développement de toutes les espèces sédentaires qui sont de loin les plus fréquentes devant le littoral.

Ces abris sont vitaux pour leur vie ou leur pérénnisation (protection contre les prédateurs, frai, etc...)

Rôle de protection contre les méthodes de pêche destructives (chalut) :

Dans ce cas, le récif est conçu pour servir d'obstacle dissuasif dans les zones interdites au chalut.

Les premiers récifs réalisés de façon empirique ont permis d'éliminer soit des matériaux toxiques comme les pneus ou les carcasses de voitures, soit des structure inadaptées comme les récifs construits avec des parpaings ou des briques dont les alvéoles se comblent trop rapidement.

Les récifs récents, mis à l'eau en France notamment, sont des copies de récifs utilisés au Japon dont le rôle est avant tout attractif et est destiné à l'origine à attirer et à fixer temporairement des poissons migrateurs très communs au Japon. Or ce type de poisson est peu fréquent dans la zone côtière de Méditerranée et les récifs de rôle attractif ne jouent alors qu'un rôle nutritionnel faible (pas conçus dans cet objectif). La conception de ces récifs nécessite une optimisation du rapport prix de contruction/volume compris entre les arêtes du récif. De ce fait, les récifs proposés actuellement sont essentiellement ouverts et importants, c'est-à-dire constitués par un amoncellement de volumes prismatiques définis par leurs arêtes ou leur périphérie sans paroi continue suffisante pour y créer un abri obscur.

La présente invention de "récif-abri" consiste en un volume arrondi au mois au niveau de ses arêtes, ouvert sur sa face inférieure sur laquelle il repose sur le fond et comportant, au niveau de sa périphérie inférieure des ouvertures réparties de manière à ne pas se faire face les unes aux autres.

Une telle structure pourra avoir n'importe quelle forme géométrique de base, mais elle constituera de préférence une coupole d'aspect hémi-sphéroïdal, s'évasant éventuellement vers le bas pour former un rebord dans lequel sont pratiquées les ouvertures, permettant l'accès à l'intérieur, et qui peuvent de préférence être évasées vers l'extérieur.

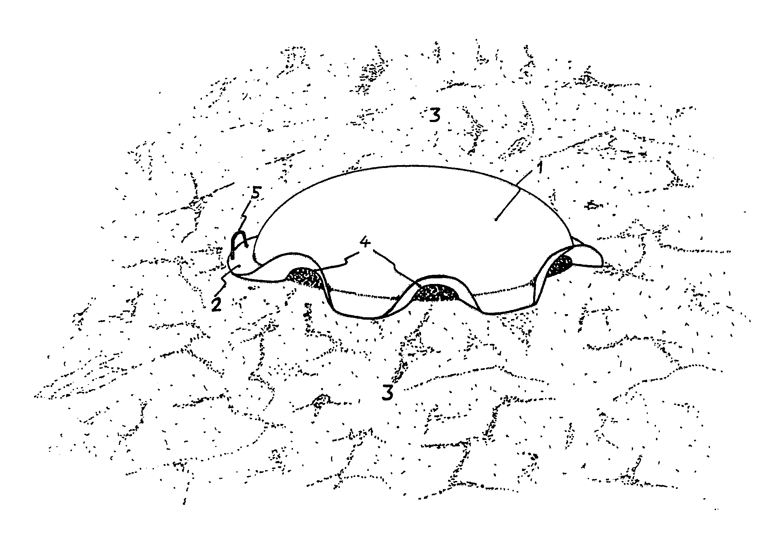

Le dessin annexé illustre à titre d'exemple non limitatif l'aspect d'un tel abri selon l'invention.

Sur ce dessin, l'abri 1 a la forme d'une calotte s'évasant pour former à sa base une couronne 2, pénétrant à une certaine profondeur sur un substrat meuble 3. Un certain nombre d'ouvertures 4 sont pratiquées dans la périphérie intérieure, au niveau du fond 3. Des crochets 5 sont prévus pour la mise en place de la structure.

On constate que cette calotte 1 forme une cavité obscure dont le sol est constitué par le sol marin, c'est-à-dire le substrat naturel. Un tel récif imite ainsi parfaitement les abris ou "ragues" dans lesquels la grande majorité des poissons littoraux se cachent. Les ragues naturelles les plus fréquentées sont également des cavités obscures avec un substrat sableux naturel "balayé" régulièrement par de faibles courants.

En Méditerranée les Sparidés, les Labridés, les Serranidés, les Sciaenidés, les Loups (Dicentrarchus labrax), les Mugilidés, les Mostelles (Phycis phycis), ainsi que les Saupes adultes (Sarpa salpa), se rencontrent toujours ou lors du frai dans ce type d'abris assez rares dans la nature. Ce récif ne convient pas aux poissons prédateurs que l'on ne cherche généralement pas à multiplier (Congres = Conger conger et Murènes = Muraena helena), et qui préfèrent des failles étroites.

Les entrées 4 étant toutes disposées au niveau du sol 3, la plus grande partie du volume du récif ne peut être vue de l'extérieur et reste à l'obscurité. Il est souhaitable de réaliser ces entrées évasées vers l'extérieur et de telle sorte qu'elles ne soient pas dans le même axe. En effet, la plupart des poissons cherchent des abris à plusieurs sorties. Ils aiment aussi se cacher complètement de telle façon qu'on ne puisse les voir sans rentrer dans le récif (le poisson ce "colle" au plafond du récif). Cette condition est remplie par le présente structure.

Il convient de noter que, au contraire des fonctions recherchées antérieurement, la forme de ce récif ne doit comprendre aucune aspérité, son contour devant s'enfoncer lentement dans le sol sous l'effet de son poids. Les pêcheurs peuvent donc pêcher sur le site sans risque pour leurs filets.

Toutefois il n'est pas incompatible avec cette particularité de prévoir sur la surface de la coupole une couche ou revêtement granulé, favorisant la fixation des algues. A cet effet, pour les récifs en béton, un matériau poreux, artificiel ou naturel (argile expansé, pouzzolane, béton alvéolaire, vermiculite ou graviers), est noyé dans le béton de telle façon qu'il reste apparent. Cela favorise et accélère la couverture algale de la face exposée à la lumière du soleil.

Un tel récif selon l'invention peut être disposé isolé ou en petit groupe jointif. Il n'est pas nécessaire ni souhaitable de constituer de grands amoncellements (plus de 10) de ce type de récif qui n'est pas à vocation "nutritionnelle" mais d'abri quotidien ou épisodique (saisonnier ou pour le frai) pour des poissons souvent sédentaires et territoriaux.

Enfin, la taille du récif peut être variable : elle est fonction des espèces que l'on souhaite fixes (1/3 ou 1/2 m3 pour les Serranidés ou Labridés) (1/2 à 2 m3 pour les Serranidés, Mulets, Loups ou Mérous).

A titre d'exemple, une coupole en béton de 2-3 mètres de diamètre et 0,8-1 mètre de haut pèse environ 300 Kg.

Il est bien entendu que la forme en calotte ainsi décrite n'est pas limitative et que toute autre forme peut être adoptée en fonction du site, dès lors que toutes les conditions précédentes sont remplies, et notamment l'absence d'angles ou arêtes vives.

Eventuellement un petit trou peut être percé au sommet pour faciliter l'évacuation de l'air au moment de la mise en place.

## Revendications

1. Récif artificiel marin destiné à servir d'abri à la faune marine, pour en favoriser la reconstitution et l'accroissement, caractérisé en ce qu'il consiste en une structure creuse de forme arrondie, ouvert sur sa face inférieure par laquelle il repose sur le fond et comportant au niveau de sa périphérie inférieure des ouvertures réparties de manière à ne pas se faire face les unes aux autres.

2. Récif selon la revendication 1, caractérisé en ce que la structure a la forme d'une calotte sphéroïdale s'évasant vers le bas.

3. Récif selon les revendications 1 et 2, caractérisé en ce que la structure est en béton armé et comporte sur sa face extérieure un revêtement granulé.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4 ) |
|---|---|---|---|
| A | US-A-3704687 (NOHRUMA)<br>* le document en entier *<br>--- | 1-3 | A01K61/00 |
| A | US-A-4449479 (SAUCIER)<br>----- | | |

DOMAINES TECHNIQUES RECHERCHES (Int. Cl.4 )

A01K

Le présent rapport a été établi pour toutes les revendications

| Lieu de la recherche | Date d'achèvement de la recherche | Examinateur |
|---|---|---|
| LA HAYE | 16 AOUT 1989 | VON ARX V.U. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
 
& : membre de la même famille, document correspondant